# EUROPEAN PATENT SPECIFICATION

(11) **EP 2 513 522 B1**
(45) Date of publication and mention of the grant of the patent: **13.08.2014**
(21) Application number: 09795932.4
(22) Date of filing: 18.12.2009
(51) Int. Cl.: F16H 61/26, F16H 61/36, F16C 1/18, F16C 1/14

(54) **GEAR SHIFT SYSTEM**
GANGSCHALTUNGSSYSTEM
SYSTÈME DE CHANGEMENT DE VITESSE

(43) Date of publication of application: 24.10.2012
(73) Proprietor: Kongsberg Automotive AB, 56528 Mullsjö (SE)
(72) Inventor: HERMANSSON, Bengt, S-565 33 Mullsjö (SE)
(74) Representative: UEXKÜLL & STOLBERG
(86) International application number: PCT/EP2009/009154
(87) International publication number: WO 2011/072709

(56) References cited:
- JP-A- 2007 131 236

## Description

The present invention relates to a gear shift system comprising a gear shift lever, an elongate actuation member for transferring motion of said lever to a transmission or gearbox, and a coupling mechanism coupling one end of said elongate actuation member with an end portion of said lever such that actuation of said lever exerts pull or push forces on said elongate member. In particular, the elongate actuation member may be an actuation cable.

Vehicles having a transmission are frequently equipped with a gear shift system which allows manual or automatic selection between a plurality of gears. A common type of such gear shift system utilized for both manual and automatic shifting comprises a gear shift lever to be operated by the driver and one or more control or actuation linkages in the form of control or actuation cables or other types of elongate members by means of which the gear shift lever is coupled with the transmission. Each such cable or elongate member is mechanically connected at one of its ends to an end portion of the gear shift lever and at its opposite end to the transmission, e.g. to a gearbox actuator. The cables may e.g. take the form of the inner member of a Bowden type cable.

Upon manipulation of the gear shift lever by the driver by pivoting the lever about a pivot axis or a pivot point into specific positions corresponding to specific transmission settings, the end portion of the lever performs a corresponding motion that is transferred via the cables or elongate members to the transmission. In this manner, an actuation train is provided for transferring shift commands from the gear shift lever to the transmission.

In such gear shift systems it is important to provide a reliable connection between an actuation cable or other type of linkage in the form of an elongate actuation member and the gear shift lever. These connections are provided by means of connector systems or coupling mechanisms.

The coupling mechanism most frequently utilized for this purpose comprises a pin, that is injection molded into the end portion of the lever to project laterally from the end portion, i.e. transversely of the extension of the lever and the end portion thereof, and that may be provided with a spherical pin head, and an end terminal located on an elongate end piece of an actuation cable, which end terminal has an aperture or recess for receiving and retaining the pin in order to establish a connection therebetween that allows for rotational movement of the pin within the aperture or recess. Such coupling mechanisms are e.g. described in US 2004/0037624, US 2006/0039748 and US 2007/0245848

Due to the arrangement of the pin, the forces exerted upon actuation of the lever on the two ends of the pin, one end being attached to the end portion of the lever and the other end being attached to the actuation cable, subject the pin to pivotal forces which put a high load and stress on the pin in general and its joints with the lever and the cable in particular. Further, the area of transfer of actuation forces between the lever and the cable are relatively small. For these reasons, this type of coupling mechanism has the disadvantage that high mechanical requirements have to be met by both the pin itself and the two joints, all of which increases costs. For example, as one consequence it is generally considered that the pin must be made of metal. However, metal is more expensive than e.g. plastic material. Additionally, and more importantly, it is difficult and costly to introduce metal components into plastic components, which is highly disadvantageous, because it is desirable to make at least significant portions of the lever from plastic material, preferably by injection molding.

Furthermore, it generally has to be taken into account that vibration forces of the transmission can be transmitted via the actuation cable to the gear shift lever and vice versa. Commonly, this problem is addressed by adding dampening elements at suitable locations between the elongate cable end piece and the pin, e.g. between the end piece and the end terminal or inside the end terminal. For example, in an arrangement described in US 2007/0245848 a separate dampening ring is disposed circumferentially around the terminal, and the cable end piece is connected to this dampening ring. These solutions require that additional components made of resilient dampening material different from the material of the remainder of the gear shift lever and the coupling mechanism have to be added to the construction, thereby increasing material, manufacturing and assembly costs. Moreover, suitable dampening materials tend to deteriorate relatively rapidly with time and wear. Therefore, the prior art arrangements are not only complex, but also rather short-lived.

Also, in the known arrangements the terminal must be able to receive and retain a cylindrical pin or a spherical pin head. For this reason, the terminal has to include elements that are made of resilient materials and/or that are able to move within the terminal. This also adds in a disadvantageous manner to the complexity of the arrangement and/or limits the choice of materials available.

JP 2007 131236 A discloses a gear shift system according to the preamble of claim 1.

It is an object of the present invention to provide a gear shift system which has a high service life and which can be constructed and assembled in a cost-efficient manner.

This object is achieved by a gear shift system as defined in claim 1. Preferred embodiments of the invention are set out in the dependent claims.

Similar to known gear shift systems the gear shift system of the present invention comprises a gear shift lever and a linkage formed by an elongate actuation member, preferably an actuation cable. Such lever, which is preferably elongate and may further be straight or extend in a plane, is typically supported to be pivotable about a pivot axis or pivot point such that in case a user actuates the lever by manipulating one end of the lever the end portion at the opposite end moves. The actuation cable serves to transfer such motion of the end portion of the lever to a transmission, in particular to a gear box of a transmission. The elongate actuation member generally extends transversely of the end portion of the lever.

A coupling mechanism is provided by means of which one end of the elongate actuation member is coupled with the end portion of the lever. In this manner, actuation of said lever exerts pull or push forces on said elongate member, thereby moving the elongate member in accordance with the motion of the end portion of the lever.

The coupling mechanism of a gear shift system according to the present invention comprises a cavity that is provided in the end portion of the lever. The cavity may e.g. take the form of a recess or a through hole. The coupling mechanism further comprises an engagement member that is connected to a terminal end of an elongate end piece of said elongate member. This elongate end piece may be the end portion of the elongate member or a separate elongate element attached to the end of the elongate member to form an extension of the elongate member. The engagement member is provided at the outer free end of the elongate end piece and may be a separate element attached to the end piece or may be integrally formed in one piece with the end piece.

The engagement member comprises an engagement portion that is received within said cavity, either alone or together with at least a part of the remainder of the engagement member. Thus, the engagement portion may be identical with the engagement member, i.e. the entire engagement member may constitute the engagement portion, or the engagement portion may be a part or section of the engagement member. In the first case, the entire engagement member is received within the cavity, whereas in the latter case it is possible that parts of the engagement member protrude from the cavity when the engagement portion is located within the cavity. An exterior surface of the engagement portion extends in a circumferential direction and on an imaginary surface having cylindrical symmetry and defining a symmetry axis associated with the engagement portion. In other words, the exterior surface of the engagement portion has cylindrical symmetry by itself or constitutes a surface having cylindrical symmetry in which one or more grooves or recesses have been formed. In a preferred version, the engagement member comprises two opposite end faces with the engagement portion being disposed between and preferably interconnecting the end faces.

Similarly, a portion of the surface of one or more inwardly facing wall portions that define the cavity of the lever end portion, i.e. form part of the outer boundary of the cavity, extends in a circumferential direction and on an imaginary surface having cylindrical symmetry and defining a symmetry axis associated with the cavity. In the case of a plurality of wall portions they are disposed circumferentially around the cavity. Thus, the outer boundary of the cavity is formed by one or more wall portions facing towards the center of the cavity, and at least a portion of the surface of each such wall portion extends on a common imaginary surface having cylindrical symmetry. In other words, similar to the case of the exterior surface of the engagement portion, the surface or a portion of the surface of a single wall portion or the combination of the surfaces or respective portions of the surfaces of two or more wall portions has cylindrical symmetry by itself, possibly with the exception of openings in the wall portions, or constitutes a surface having cylindrical symmetry in which one or more openings or apertures have been created, either in the form of spacings between adjacent wall portions or in the form of openings or apertures formed in the wall portions.

The exterior surface of the engagement portion and the surface portion of the one or more inwardly facing wall portions provide cooperating bearing surfaces by means of which the engagement portion is supported within the cavity, such that it is able to rotate about a rotation axis defined by the symmetry axis associated with the engagement portion, wherein such rotational movement is effected upon actuation of the lever, i.e. movement of the end portion of the lever. Thus, the cavity comprises a portion that is shaped complementary as compared to the exterior of the engagement portion and that is defined by the one or more inwardly facing wall portions which serve as bearing surface for the circumferential exterior surface of the engagement portion.

It should be noted that the entire engagement member and the elongate end piece attached thereto will rotate about the rotation axis together with the engagement portion. It should further be noted that the symmetry axis associated with the engagement portion coincides with the rotation axis, and that the symmetry axis associated with the cavity coincides with or extends parallel to the rotation axis. Preferably, the two symmetry axes coincide in the absence of external forces on the engagement member. Advantageously, the symmetry axes and the rotation axis will extend transversely of the lever and its direction of pivotal motion.

One advantage of the above construction is provided by the fact that the coupling between the engagement member, i.e. the end terminal of the elongate actuation member, and the gear shift lever is effected within the end portion of the lever. Thus, different from the prior art arrangements in which the end terminal of the elongate actuation member and the end portion of the gear shift lever are coupled to a component of the coupling mechanism, namely the pin extending at an angle or offset with respect to the direction of extension of the end portion of the lever, at two spaced locations so that the end terminal is mounted offset with respect to the extension of the gear shift lever, the engagement member is coupled directly with the end portion of the lever. In this manner, it is possible that the location of force application of the elongate end piece to the coupling mechanism is disposed within the extension or plane of extension of the gear shift lever without the offset known from the prior art. Advantageously, the mechanical requirements that have to be met by the components of the coupling mechanism are reduced so that less costly materials can be employed. In particular, it is possible to avoid the use of metal materials and to manufacture all components of the coupling mechanism from plastic material, preferably by injection molding.

The gear shift system of the present invention has the further advantage that the actuation forces are transferred via the cooperating bearing surfaces which are relatively large. In contrast to the prior art systems in which the force transfer is effected via the inner surface of a bore provided in an end terminal or engagement member, according to the present invention the force transfer is effected via the larger outer surface of such engagement member. Therefore and due to the fact that no movable or flexible elements have to be provided for safely retaining a pin within a bore of the end terminal, the mechanical requirements are further reduced as compared to the prior art.

Finally, due to the absence of the separate pin that had to be attached to or coupled with both the lever and an end terminal of the elongate actuation member, the coupling mechanism according to the present invention is less complex, and manufacture and assembly are facilitated and more cost-effective.

In a preferred embodiment, the imaginary surfaces are cylindrical, i.e. outer cylinder surfaces. For example, it may be advantageous if the entire circumferential surface of the engagement member extends on such a cylindrical imaginary surface, such as in the case of a cylindrical or essentially cylindrical engagement member. In the simplest case, the engagement member is a cylindrical component that is received within a cylindrical cavity. Then, the engagement portion is identical with the engagement member.

In a preferred embodiment, the elongate end piece is connected to the exterior surface of the engagement portion such that the elongate cable end piece extends transversely, and preferably perpendicularly or essentially perpendicularly, with respect to the symmetry axis associated with the engagement portion. In particular, the terminal end of the end piece may be connected to a portion of the exterior surface such that it extends transversely and preferably perpendicularly or essentially perpendicularly from that surface portion.

The cavity provided in the end portion of the lever may be a portion of a larger cavity or recess provided in the lever end portion. In that case, the larger cavity or recess comprises a portion defining said cavity, e.g. by means of one or more suitable wall portions disposed inside the larger cavity or recess. This arrangement may serve to reduce the amount of material required for constructing the end portion of the lever, thereby reducing costs and weight.

In a preferred embodiment, an aperture is provided in the end portion of the lever through which aperture the elongate end piece extends out of the cavity to the exterior of the end portion of the lever. Such aperture may be provided in one of the one or more inwardly facing wall portions defining the cavity or may be constituted by a spacing between adjacent ones from a plurality of such inwardly facing wall portions. This aperture extends in a transverse direction with respect to the symmetry axes and preferably in a perpendicular or essentially perpendicular direction. It is further preferred that the range of rotational motion of the engagement member about the rotation axis is limited by two opposing wall portions bounding the aperture in the two directions of rotation. In particular it is preferred if the two extreme positions in the two directions of rotation are the positions in which the elongate end piece abuts a respective one of the two opposing walls. In any case, the extreme positions may advantageously correspond to the extreme positions of the gear shift lever assumed during regular operation of the gear shift system, e.g. Park and Low for an automatic gear shift system having a Park-Reverse-Neutral-Drive-Low gate. In this manner, the possible range of motion of the engagement member during regular operation of the gear shift system can be conveniently defined. In the alternative, one of the two extreme positions may correspond to a position which is only used when assembling the gear shift system.

In a preferred embodiment, the engagement member and the cavity are shaped and dimensioned such that the engagement member is received completely within the cavity, thereby minimizing space requirements. In particular, it is advantageous if the entire or essentially the entire circumferential surface of the engagement member functions as one of the two cooperating bearing surfaces. In the latter case, the engagement portion is identical or essentially identical to the engagement member.

According to the present invention, the coupling mechanism also comprises a pin that is disposed inside the cavity. It is positioned in the center of the cavity. Accordingly, in an unbiased state, i.e. in the absence of external forces, it is arranged to generally extend along the symmetry axis associated with the cavity. Further, a bore is provided in the engagement member. This bore is shaped and arranged to receive at least a portion of the pin such that the engagement member can be mounted on the pin and is able to rotate about the pin. In this manner, the pin advantageously serves to center the engagement portion within the cavity and to define the position of the rotation axis within the cavity. Preferably, the pin and the bore are essentially cylindrical, so that no spherical pin head has to be provided, thereby allowing for a simpler construction of the engagement member and for use of a wider range of materials. Importantly, due to the fact that the support of the engagement portion within the cavity and the transfer of actuation forces is mainly effected by the cooperating bearing surfaces, the pin may be made of plastic material.

According to the present invention, the pin is mounted to and extends from a resilient arm, thereby enabling a certain degree of movement of the pin perpendicularly to the symmetry axis associated with the cavity.

The arm is a wall portion that is at least a part of a bottom that defines the cavity at one of the two ends of the cavity in the direction of the symmetry axis associated with the cavity. In other words, the cavity has the form of a recess that is defined laterally be the one or more inwardly facing wall portions and at one end by the bottom. In case the radius of the imaginary surface associated with the cavity is slightly greater than the radius of the imaginary surface associated with the engagement portion, i.e. in case the engagement member is able to move to some extent within the cavity at least when no actuation forces are exerted on it by means of the gear shift lever, providing the pin on a resilient arm has the advantage that when vibrations are introduced from either the lever or the cable, the engagement member is free to oscillate while the vibrations are absorbed by the resilient arm. In this manner, it is not necessary to incorporate additional dampening elements which entail the disadvantages mentioned above. For each application, the extent of possible movement of the engagement portion within the cavity should be determined by trading off the actuation effect achieved when moving the gear shift lever against the dampening effect. In this connection, it has to be noted that in case the radius difference of the two imaginary surfaces is too large, i.e. there is too much clearance in the cavity for the engagement portion, the gear shift lever has to be moved over a large distance before the cooperating bearing surfaces engage each other. This has the disadvantages that the user experiences an indirect control behavior when actuation the gear shift lever, and that the construction materials of the coupling mechanism, preferably plastic, are subjected to a rather high stress. In preferred embodiments the radius difference is, for example, in the range of 0.3 to 0.4 mm.

It is also preferred that such a pin comprises at least one slot that extends from a free terminal end of the pin along the direction of extension of the pin. In other words, the pin comprises at least two resilient fingers. The pin and the corresponding bore in the engagement member are dimensioned such that, when the engagement member is mounted on the pin and the pin engages the bore, the fingers are forced towards the longitudinal axis of the pin, so that due to their resilient force they exert pressure forces on the interior surface of the bore which serve to retain the engagement member on the pin. It is further preferred that an outwardly projecting flange is provided at the free end of one, more or all of these fingers. Such flanges are positioned such that they engage corresponding portions within the engagement member or an end face of the engagement member in order to further secure the engagement member on the pin.

In a preferred embodiment, the coupling mechanism is entirely made from plastic material and is advantageously injection molded.

In a preferred embodiment, at one of the two ends of the cavity in the direction of the symmetry axis associated with the cavity, the cavity opens towards the exterior of the end portion of the lever in a lateral surface thereof. In this manner, an insertion opening is disposed in a lateral surface of the end portion. The opening is dimensioned such that it is possible to remove the engagement member from and insert it into the cavity by moving the engagement member along the symmetry axis associated with the cavity. Advantageously, the symmetry axes associated with the cavity and the engagement portion coincide during this operation. By means of this construction disassembly and assembly of the gear shift system is significantly facilitated. At the opposite end of the cavity it may be closed by a bottom, such as, e.g. a bottom formed at least in part by the resilient arm mentioned above. It is understood from the earlier explanations that, of course, inserting the engagement member into the cavity does not mean that the entire engagement member is disposed inside the cavity, but that at least the engagement portion is disposed inside the cavity in its support position.

In this embodiment it is further preferred that a lug extending towards the symmetry axis associated with the cavity is provided proximate to the edge of the insertion opening, preferably at one of the inwardly facing wall portions. The engagement member comprises an elongate recess that is provided in a circumferential surface thereof and extends parallel to the symmetry axis associated with the engagement portion. In particular, the recess is, at least also, provided in the exterior surface of the engagement portion.

The lug and the elongate recess are arranged and dimensioned such that it is only possible to remove and insert the engagement member from and into, respectively, the cavity by moving it along the symmetry axis associated with the cavity in the manner described above, if the engagement member has an angular orientation such that the lug is received within the elongate recess. In other words, for inserting the engagement member through the insertion opening into the cavity it is at first necessary to choose an angular orientation of the engagement member allowing the lug to enter into the elongate recess. During the subsequent insertion of the engagement member, the lug then travels along the elongate recess. The lug is moreover shaped and arranged such that following movement of the engagement portion into the correct position within the cavity the engagement member can be rotated with the lug and the elongate recess having different angular orientations and the lug retaining the engagement portion within the cavity. This may e.g. be achieved by arranging the lug such that it abuts and travels over an end face of the engagement member located adjacent the insertion opening.

This embodiment comprising a lug and an elongate recess facilitates and ensures in a simple manner the proper alignment of the engagement member with respect to the lever upon assembly and disassembly and to safely retain the engagement portion within the cavity when the engagement member has any other angular orientation. The angular orientation for assembly and disassembly can be chosen to correspond to an orientation that is not assumed during regular operation.

In a preferred embodiment, at one of the two ends of the cavity in the direction of the symmetry axis associated with the cavity, preferably opposite an end at which an insertion opening of the type mentioned above is provided, the cavity is defined by a bottom that comprises at least one bottom wall portion. Further, the engagement member comprises an end face extending transversely and preferably perpendicularly or essentially perpendicularly with respect to the symmetry axis associated with the engagement portion.

In this embodiment, a protrusion is arranged on either the bottom wall portion or the end face of the engagement member. In the first case, the protrusion is arranged to extend parallel to the symmetry axis associated with the cavity and radially spaced from both the symmetry axis associated with the cavity and the surface portion of the one or more inwardly facing wall portions, and in the second case the protrusion is arranged to extend parallel to the symmetry axis associated with the engagement portion and radially spaced from both the symmetry axis associated with the engagement portion and the exterior surface of the engagement portion.

Corresponding to such protrusion, a groove is provided in either the end face of the engagement member, namely in the first case of the protrusion being arranged on the bottom wall portion, or in the bottom wall portion, namely in the second case of the protrusion being arranged on the end face of the engagement member. In the first case, the groove extends circumferentially about the symmetry axis associated with the engagement portion and radially spaced from both the symmetry axis associated with the engagement portion and the exterior surface of the engagement portion, and in the second case the groove extends circumferentially about the symmetry axis associated with the cavity and radially spaced from both the symmetry axis associated with the cavity and the surface portion of the one or more inwardly facing wall portions.

In any case, the protrusion and the groove are arranged such that the protrusion is received within the groove and travels within the groove upon rotation of the engagement member about the rotation axis. In this regard, at least a portion of the external surface of the protrusion and at least a portion of the internal surface of the groove form additional cooperating bearing surfaces that further serve to support the engagement portion within the cavity and the entire engagement member for their rotational movement about the rotation axis. This arrangement also provides the advantage of increasing the surface via which the actuation forces are transferred.

In the described embodiment comprising a groove and a protrusion it is further preferred that the groove, and possibly also the protrusion, extends along a circle or a segment of a circle, which circle is centered about the symmetry axis associated with, respectively, the cavity or the engagement portion and preferably has a diameter that is smaller than the diameter of the end face of the engagement member.

It is also possible that the engagement member comprises the above groove or protrusion in each of two opposing end faces in order to advantageously enable insertion of the engagement member in both orientations. This arrangement further facilitates assembly of the gear shift system.

In case an aperture is provided through which the elongate end piece extends as mentioned above, it is further preferred that with respect to said aperture the groove or the protrusion of the bottom wall portion is arranged on an opposite side of the symmetry axis associated with the cavity. This arrangement advantageously takes account of the fact that the aperture reduces the size of the bearing surface provided by the inwardly facing wall portions available for the transfer of actuation forces.

Generally, the gear shift system may be a manual gear shift system or, preferably, an automatic gear shift system.

In the following a preferred embodiment of the invention is discussed in further detail with reference to the accompanying drawings.
- Figure 1: shows a schematic perspective view of an engagement member attached to an elongate end piece of an actuation cable.
- Figure 2a: shows a schematic perspective view of an end portion of a gear shift lever.
- Figure 2b: shows a different schematic perspective view of the end portion of the gear shift lever shown in Figure 2a.
- Figure 3: shows a schematic perspective view of the engagement member shown in Figure 1 coupled to the lever end portion shown in Figure 2.
- Figure 4: shows a schematic top plan view of the engagement member shown in Figure 1 coupled to the lever end portion shown in Figure 2, wherein the angular orientation of the engagement member with respect to the lever end portion is different from the orientation shown in Figure 3.
- Figure 5: shows a schematic cross-sectional view corresponding to Figure 3 and taken along the direction of extension of the elongate cable end piece.

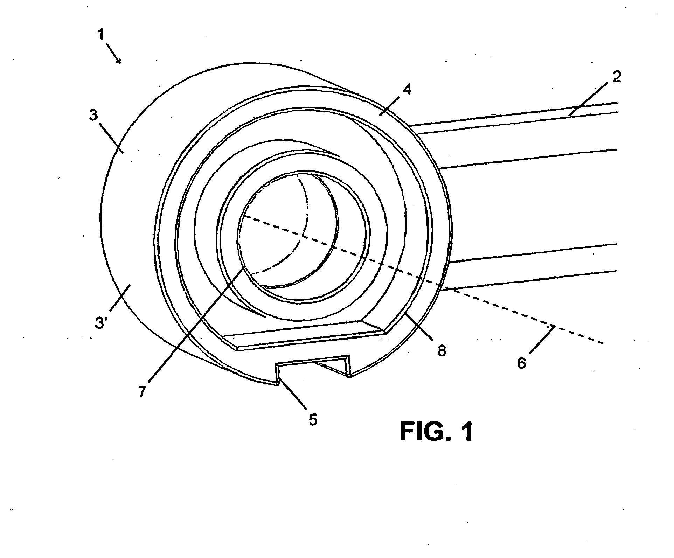

In Figure 1, an engagement member 1 mounted on the terminal end of an elongate end piece 2 of an actuation cable is shown. The engagement member 1 has a cylindrical circumferential exterior surface 3 that interconnects two end faces 4, only one of which is visible in Figure 1. An elongate recess 5 is formed in the exterior surface 3 and extends between the two end faces 4. The portion 3' of the exterior surface 3 outside the elongate recess 5 extends on an imaginary cylindrical surface, which, in case the elongate recess 5 would not be provided, would be identical to the exterior surface 3. The imaginary cylindrical surface defines a symmetry axis 6 associated with the engagement member. The two end faces 4 extend perpendicularly with respect to the symmetry axis 6, and the elongate recess 5 extends parallel to and spaced from the symmetry axis 6.

A through bore 7 having a circular cross section extends through the engagement member 1 along the symmetry axis 6. Further a generally circular groove 8 is provided in each of the two end faces 4.

The elongate cable end piece 2 is attached to the exterior surface 3 of the engagement member 1 such that the elongate cable end piece 2 extends perpendicularly with respect to the symmetry axis 6.

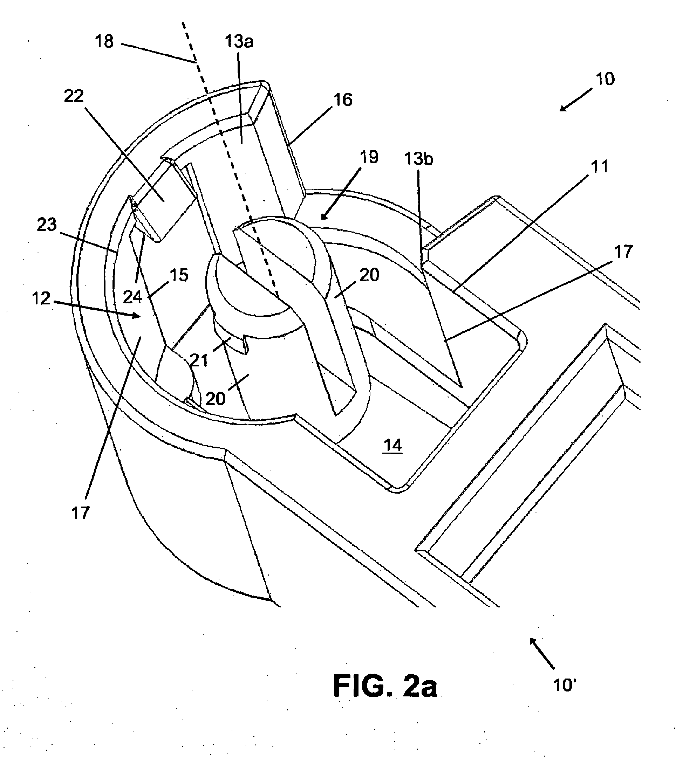

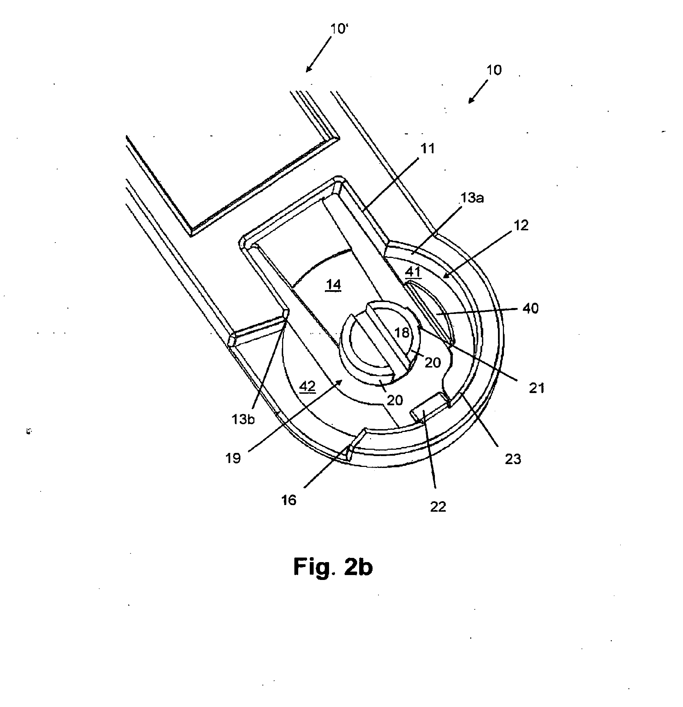

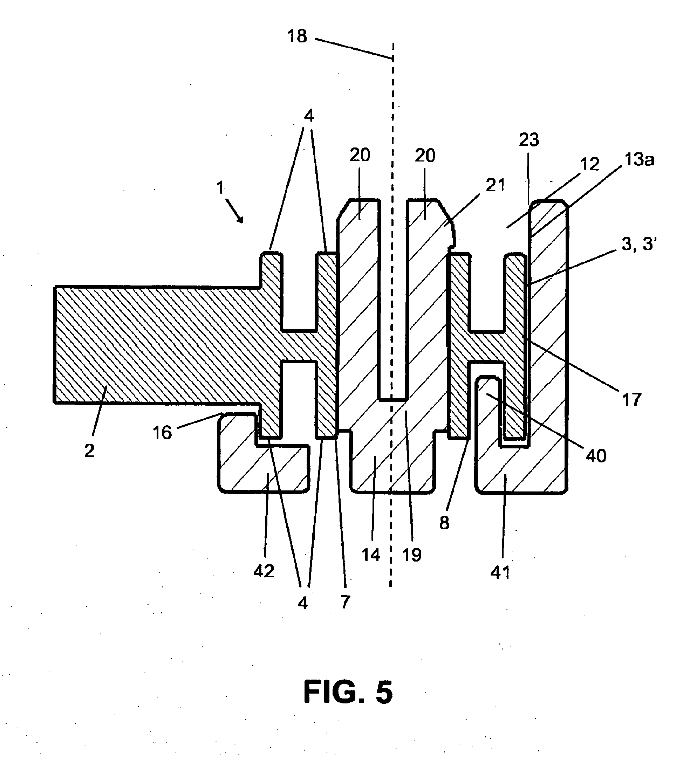

Figures 2a and 2b show the end portion 10 of an elongate gear shift lever 10'. The gear shift lever 10' is mounted to be pivotable about a pivot axis. The end portion 10 comprises a recess 11, a part of which forms a generally cylindrical cavity 12. The cylindrical cavity 12, which is open at the top, is defined laterally by two inwardly facing wall portions 13a, 13b, that are spaced in the circumferential direction, and by a bottom wall portion 14 together with further bottom wall portions 41 and 42 (the latter bottom wall portions are not shown in Figure 2a but are visible in Figures 2b and 5) at the bottom (in the present description terms such as "top" and "bottom" relate to the orientation shown in the drawings), wherein the bottom wall portion 14 is provided in the form of a resilient arm. The wall portion 13a comprises a window 15, and a spacing between the wall portions 13a, 13b forms an aperture 16, the purpose of which will become apparent later-on.

As can be taken from Figures 2a and 2b, portions of the inner surface of the inwardly facing wall portions 13a, 13b form in combination an interior surface that extends on a further imaginary cylindrical surface. This further imaginary cylindrical surface defines a symmetry axis 18 associated with the cavity 12.

A generally cylindrical pin 19 comprising two fingers 20 is disposed inside the cavity 12 such that it extends in the center of the cavity 12 from a free end of the resilient arm 14 along the symmetry axis 18 associated with the cavity 12. At the upper end of one of the fingers 20 an outwardly projecting flange 21 is provided.

Further, a lug 22 is provided at the edge of the upper opening 23 of the cavity 12, which lug 22 extends from the inwardly facing wall portion 13a in the direction of the symmetry axis 18 associated with the cavity 12, i.e. the lug 22 projects into the cavity 12.

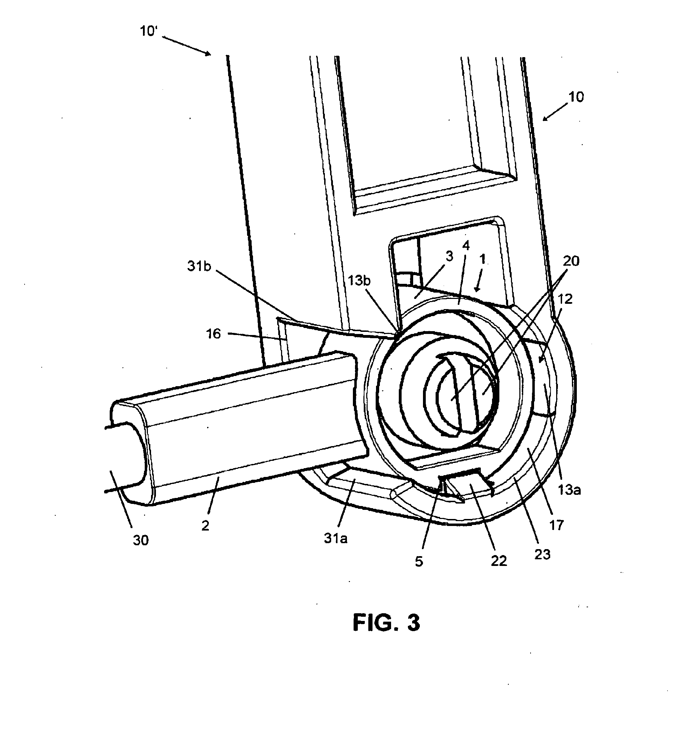

Figure 3 shows the engagement member 1 being coupled with the end portion 10 of the lever 10'. As can be seen from the Figure, the engagement member 1 is disposed inside the cavity 12 such that the pin 19 extends through the through bore 7 and the elongate cable end piece 2 extends through the aperture 16. The engagement member 1 and the cavity 12 are of complementary shape. It can also be seen in this Figure that the cable end piece 2 is a separate element that is attached to the terminal end of an actuation cable 30.

In this arrangement, the two symmetry axes 6, 18 essentially coincide, and the inner surface 17 of the lever end portion 10 and the exterior surface 3' of the engagement member 1 are cooperating bearing surfaces that, together with the pin 19, support the engagement member 1 within the cavity 12 such that it is able to rotate about the pin 19 and the symmetry axis 6 associated with the engagement member 1. For both pull and push actuation the actuation forces between the end portion 10 of the lever 10' and the elongate cable end piece 2 are transferred via the relatively large bearing surfaces 3' and 17. It should be noted that in the present embodiment the entire portion of the engagement member 1 between the two end faces 4 constitutes an engagement portion as defined generally above.

The range of rotational movement of the engagement member 1 within the cavity 12 is limited by the circumferential extension of the aperture 16. As can be taken from Figure 3, the two extreme positions of the engagement member 1 in the two rotational directions are defined by the positions in which the elongate cable end piece 2 abuts a respective wall portion 31a, 31b forming the circumferential boundaries of the aperture 16. Advantageously, the circumferential dimensions of the aperture 16 are chosen such that the range of possible rotational motion of the engagement member 1 corresponds to the range utilized during regular operation of the gear shift system.

In the position of the engagement member 1 shown in Figure 3, the angular orientation of the lug 22 is identical with the angular orientation of the elongate recess 5 provided in the exterior circumferential surface 3 of the engagement member 1. On the one hand, this angular orientation allows to remove the engagement member 1 from the cavity 12 by moving it along the symmetry axis 18 associated with the cavity 12 out of the upper opening 23 thereof. During this removal, the lug 22 travels along the elongate recess 5.

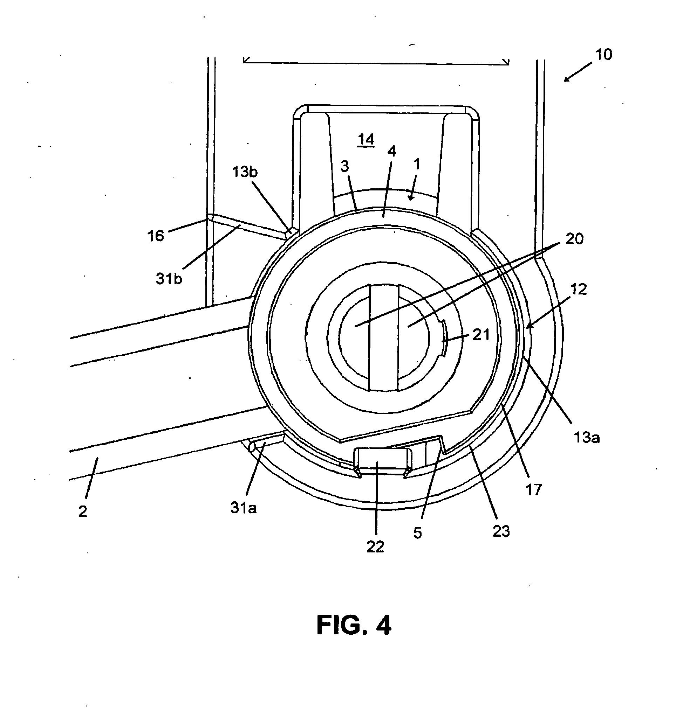

On the other hand, in the position of the engagement member 1 shown in Figure 3 it is also possible to rotate the engagement member 1 such that the angular orientation of the lug 22 and the elongate recess 5 no longer coincide. This is possible, because the engagement member 1 is dimensioned such that, if fully inserted into the cavity 12, the lug 22 has just moved out of the end of the elongate recess 5. A change of the rotational position of the engagement member 1 from the position shown in Figure 3 therefore results in a planar bottom surface 24 of the lug 22 abutting a portion of the top end face 4 of the engagement member 1, thereby preventing movement of the engagement member 1 out of the upper opening 23 of the cavity 12. This situation is illustrated in Figure 4, which at the same time shows a position of the engagement member 1 proximate to its extreme position in which the elongate cable end piece 2 abuts the wall portion 31a.

An additional retaining means is provided by the outwardly projecting flange 21 of one of the fingers 20 of the pin 19. Due to the presence of the flange 21, the respective finger 20 is deflected inwardly during assembly when the pin 19 is introduced into the through bore 7. The length of the pin 19 is selected such that upon full insertion of the engagement member 1 into the cavity 12 the upper end of the pin 19 including the flange 21 projects out of the through bore 7, thereby enabling the respective finger 20 and flange 21 to snap outwardly. In this position the flange 21 prevents pulling the engagement member 1 off the pin 19. This is also illustrated in the cross sectional view of Figure 5.

It will be immediately understood that during assembly of the gear shift system the engagement member 1 will be inserted into the cavity 12 through the opening 23 in the angular orientation shown in Figure 3. As described above, once the engagement member 1 has been fully inserted into the cavity 12, it is able to rotate and is retained inside the cavity 12 by means of the lug 22. The lug 22 and the elongate recess 5 are advantageously positioned such that the angular orientation of Figure 3 is not achieved during regular operation of the gear shift system, i.e. it does not correspond to any of the regular operating positions of the gear shift lever 10'.

Generally, the diameter of the engagement member 1, i.e. the diameter of the corresponding imaginary cylindrical surface defining the symmetry axis 6, will be slightly smaller than the diameter of the cavity 12, i.e. the diameter of the corresponding imaginary cylindrical surface defining the symmetry axis 18. For this reason and due to the arm 14 to which the pin 19 is mounted being resilient, the engagement member 1 is able to radially move within the cavity 12 to some extent. In this manner, vibrations transmitted via the actuation cable 30 or the gear shift lever 10' can be taken up by the arm 14 so that dampening is provided.

Figure 5 shows a cross sectional view of the arrangement shown in Figure 3 taken along the direction of extension of the elongate cable end piece 2. It can be seen that, as already indicated above, a circular groove 8 is provided in each of the two opposing end faces 4 of the engagement member 1. A protrusion or projection 40 extending parallel to the symmetry axis 18 associated with the cavity 12 and spaced from both that symmetry axis 18 and the inner bearing surface 17 is provided at the bottom wall portion 41 defining a bottom of the cavity together with the arm 14 and the further bottom wall portion 42 (see also Figure 2b). The projection 40 is disposed opposite the aperture 16 through which the elongate cable end piece 2 extends out of the lever end portion 10.

In the fully inserted state of the engagement member 1 shown in Figures 3 and 4 the projection 40 is disposed inside the groove 8 in the bottom end face 4 of the engagement member 1. Advantageously, the exterior surface of the projection 40 and the inner surface of the groove 8 serve as additional bearing surfaces that further increase the surface via which the actuation forces are transferred and compensating for the loss of available bearing surface due to the presence of the aperture 16.

## Claims

1. A gear shift system comprising
- a gear shift lever (10'),
- an elongate actuation member for transferring motion of an end portion (10) of said lever (10') to a transmission, and
- a coupling mechanism coupling one end of said elongate actuation member with said end portion (10) of said lever (10'),
wherein said coupling mechanism comprises
- a cavity (12) provided in said end portion (10) of said lever (10'), and
- an engagement member (1) provided at a terminal end of an elongate end piece (2) of said elongate member, said engagement member (1) comprising an engagement portion (1) that is received within said cavity (12),
- wherein an exterior surface (3') of said engagement portion (1) and a surface portion (17) of one or more inwardly facing wall portions (13a, 13b) defining said cavity (12)
a) each extend on a respective imaginary surface having cylindrical symmetry and defining a symmetry axis (6) associated with said engagement portion (1) and a symmetry axis (18) associated with said cavity (12), respectively, and
b) form cooperating bearing surfaces (3', 17) that support said engagement portion (1) within said cavity (12) for a rotational movement about a rotation axis defined by said symmetry axis (6) associated with said engagement portion (1), such that upon actuation of said lever (10') said engagement member (1) rotates about said rotation axis, and
- wherein said coupling mechanism further comprises a pin (19) disposed inside said cavity (12), and a bore (7) is provided in said engagement member (1), wherein the bore (7) is shaped and arranged to receive at least a portion of said pin (19) such that said engagement member (1) is able to rotate about said pin (19) and said pin (19) defines said rotation axis, **characterized in that** at one of the two ends of said cavity (12) in the direction of said symmetry axis (18) associated with said cavity (12), said cavity (12) is defined by a bottom comprising at least one bottom wall portion (14, 41, 42), wherein said pin (19) is attached to and extends from a resilient arm that forms one (14) of said at least one bottom wall portion (14, 41, 42).

2. The gear shift system according to claim 1, wherein said imaginary surfaces are cylindrical.

3. The gear shift system according to any of the preceding claims, wherein said elongate end piece (2) is connected to said exterior surface (3') of said engagement portion (1) such that said elongate end piece (2) extends transversely of said symmetry axis (6) associated with said engagement portion (1).

4. The gear shift system according to any of the preceding claims, wherein an aperture (16) is provided in one of said one or more inwardly facing wall portions (13a, 13b) defining said cavity (12) or between two such inwardly facing wall portions (13a, 13b), through which aperture (16) said elongate end piece (2) extends out of said cavity (12) to the exterior of said end portion (10) of said lever (10').

5. The gear shift system according to claim 4, wherein the maximum range of rotational motion of said engagement member (1) about said rotation axis is defined by two opposing wall portions (31a, 31b) bounding said aperture (16), wherein in the two extreme positions in the two directions of rotation said elongate end piece (2) abuts a respective one of said two opposing walls (31a, 31b).

6. The gear shift system according to any of the preceding claims, wherein said engagement member (1) and said cavity (12) are shaped and dimensioned such that said engagement member (1) is received completely within said cavity (12).

7. The gear shift system according to claim 1, wherein the radius of said imaginary surface associated with said cavity is greater than the radius of said imaginary surface associated with said engagement portion, so that said engagement portion is able to move within said cavity in a radial direction.

8. The gear shift system according to claim 1 or claim 7, wherein said pin (19) comprises at least one slot that extends from a free terminal end of said pin (19) along the direction of extension of said pin (19) such that said pin (19) comprises at least two resilient fingers (20), wherein said pin (19) and said bore (7) are dimensioned such that when said pin (19) engages said bore (7) said fingers (20) are forced towards the longitudinal axis of said pin (19), so that due to their resilient force they exert pressure forces against the interior surface of said bore (7) which serve to retain said engagement member (1) on said pin (19).

9. The gear shift system according to any of the preceding claims, wherein at the other of the two ends of said cavity (12) in the direction of said symmetry axis (18) associated with said cavity (12), said cavity (12) opens towards the exterior of said end portion (10) of said lever (10') such that an insertion opening (23) is disposed in a surface of said end portion (10) of said lever (10') through which insertion opening (23) said engagement member (1) can be removed from and inserted into said cavity (12) by moving it along said symmetry axis (18) associated with said cavity (12).

10. The gear shift system according to claim 9, wherein
- a lug (22) is provided proximate to the edge of said insertion opening (23) at one of said inwardly facing wall portions (13a, 13b) and extends towards said symmetry axis (18) associated with said cavity (12), and
- an elongate recess (5) extending parallel to said symmetry axis (6) associated with said engagement portion (1) is provided in a circumferential surface (3) of said engagement member (1),
- wherein said lug (22) and said elongate recess (5) are arranged and dimensioned such that it is only possible to remove and insert said engagement member (1) from and into, respectively, said cavity (12) by moving it along said symmetry axis (18) associated with said cavity (12) if said engagement member (1) has an angular orientation such that said lug (22) is received within said elongate recess (5), and
- wherein said lug (22) is arranged such that following insertion of said engagement member (1) into said cavity (12) said engagement member (1) can be rotated within said cavity (12) with said lug (22) and said elongate recess (5) having different angular orientations and said lug (22) retaining said engagement member (1) within said cavity (12).

11. The gear shift system according to any of the preceding claims, wherein at the one of the two ends of said cavity (12) in the direction of said symmetry axis (18) associated with said cavity (12), said cavity (12) is defined by the bottom comprising another bottom wall portion (41), and said engagement member (1) comprises an end face (4) extending perpendicularly with respect to said symmetry axis (6) associated with said engagement portion (1), wherein a protrusion (40) is arranged on one of
- said bottom wall portion (41) such that it extends parallel to said symmetry axis (18) associated with said cavity (12) and spaced from both said symmetry axis (18) associated with said cavity (12) and said surface (17) of said one or more inwardly facing wall portions (13a, 13b), or
- said end face (4) such that it extends parallel to said symmetry axis (6) associated with said engagement portion (1) and spaced from both said symmetry axis (6) associated with said engagement portion (1) and said exterior surface (3') of said engagement portion (1),
and a groove (8) is provided in the other of
- said end face (4) such that it extends circumferentially about said symmetry axis (6) associated with said engagement portion (1) and spaced from both said symmetry axis (6) associated with said engagement portion (1) and said exterior surface (3') of said engagement portion (1), or
- said bottom wall portion (41) such that it extends circumferentially about said symmetry axis (18) associated with said cavity (12) and spaced from both said symmetry axis (18) associated with said cavity (12) and said surface (17) of said one or more inwardly facing wall portions (13a, 13b), respectively, wherein said protrusion (40) and said groove (8) are arranged such that said protrusion (40) is received within said groove (8) and travels within said groove (8) upon rotation of said engagement member (1) about said rotation axis, and wherein at least a portion of the external surface of said protrusion (40) and at least a portion of the internal surface of said groove (8) form additional cooperating bearing surfaces that support said engagement portion (1) within said cavity (12) for said rotational movement about said rotation axis.

12. The gear shift system according to claim 11, wherein said groove (8) extends along a circle or a segment of a circle.

13. The gear shift system according to claim 4 or claim 5 and according to claim 11 or claim 12, wherein said groove (8) or said protrusion (40) of said bottom wall portion (41) is arranged on an opposite side of said symmetry axis (18) associated with said cavity (12) with respect to said aperture (16).

## Patentansprüche

1. Gangschaltsystem mit
- einem Gangschalthebel (10'),
- einem langgestreckten Betätigungsglied zum Übertragen von Bewegung eines Endbereichs (10) des Hebels (10') zu einem Getriebe und
- einem Kopplungsmechanismus zum Koppeln eines Endes des langgestreckten Betätigungsgliedes an den Endbereich (10) des Hebels (10'),
wobei der Kopplungsmechanismus aufweist
- einen Hohlraum (12), der in dem Endbereich (10) des Hebels (10') vorgesehen ist, und
- ein Eingriffsteil (1), das an einem Ende eines länglichen Endstücks (2) des langgestreckten Gliedes vorgesehen ist, wobei das Eingriffsteil einen Eingriffsabschnitt (1) aufweist, der in dem Hohlraum (12) aufgenommen ist,
- wobei eine äußere Oberfläche (3') des Eingriffsabschnitts (1) und ein Oberflächenbereich (17) von einem oder mehreren nach innen gerichteten Wandbereichen (13a, 13b), die den Hohlraum (12) definieren,
a) jeweils auf einer jeweiligen imaginären Oberfläche verlaufen, die Zylindersymmetrie hat und die eine dem Eingriffsabschnitt (1) zugeordnete Symmetrieachse (6) bzw. eine dem Hohlraum (12) zugeordnete Symmetrieachse (18) definieren, und
b) zusammenwirkende Lageroberflächen (3', 17) bilden, die den Eingriffsabschnitt (1) innerhalb des Hohlraums (12) für eine Drehbewegung um eine Drehachse lagern, die durch die dem Eingriffsabschnitt (1) zugeordnete Symmetrieachse (6) definiert ist, so dass sich der Eingriffsabschnitt (1) auf die Betätigung des Hebels (10') hin um die Drehachse dreht, und
- wobei der Kopplungsmechanismus weiter einen Stift (19) aufweist, der innerhalb des Hohlraums (12) angeordnet ist, und wobei in dem Eingriffsabschnitt (1) eine Bohrung (7) vorgesehen ist, wobei die Bohrung (7) so geformt und angeordnet ist, um wenigstens einen Teil des Stiftes (19) aufzunehmen, so dass das Eingriffsteil (1) dazu in der Lage ist, sich um den Stift (19) zu drehen, und der Stift (19) die Drehachse definiert, **dadurch gekennzeichnet, dass** an einem der beiden Enden des Hohlraums (12) in der Richtung der dem Hohlraum (12) zugeordneten Symmetrieachse (18) der Hohlraum (12) durch einen Boden definiert ist, der wenigstens einen Bodenwandbereich (14, 41, 42) aufweist, wobei der Stift (19) angebracht ist an und ausgeht von einem elastischen Arm, der einen (14) von dem wenigstens einen Bodenwandbereich (14, 41, 42) bildet.

2. Gangschaltsystem nach Anspruch 1, wobei die imaginären Oberflächen zylindrisch sind.

3. Gangschaltsystem nach einem der vorhergehenden Ansprüche, wobei das längliche Endstück (2) mit der äußeren Oberfläche (3') des Eingriffsabschnitts (1) verbunden ist, so dass das längliche Endstück (2) sich quer zu der dem Eingriffsabschnitt (1) zugeordneten Symmetrieachse (6) erstreckt.

4. Gangschaltsystem nach einem der vorhergehenden Ansprüche, wobei in dem einen oder den mehreren nach innen gerichteten Wandbereichen (13a, 13b), die den Hohlraum (12) definieren, oder zwischen zwei solchen nach innen gerichteten Wandbereichen (13a, 13b) eine Öffnung (16) vorgesehen ist, durch die das längliche Endstück (2) aus dem Hohlraum (12) in den Außenraum des Endbereichs (10) des Hebels (10`) verläuft.

5. Gangschaltsystem nach Anspruch 4, wobei der Maximalbereich der Drehbewegung des Eingriffsteils (1) um die Drehachse durch zwei gegenüberliegende Wandbereiche (31a, 31b) definiert ist, die die Öffnung (16) begrenzen, wobei in den beiden Extremstellungen in den beiden Drehrichtungen das längliche Endstück (2) an einer jeweiligen der beiden gegenüberliegenden Wände (31a, 31b) anliegt.

6. Gangschaltsystem nach einem der vorhergehenden Ansprüche, wobei das Eingriffsteil (1) und der Hohlraum (12) so geformt und dimensioniert sind, dass das Eingriffsteil (1) vollständig innerhalb des Hohlraums (12) aufgenommen ist.

7. Gangschaltsystem nach Anspruch 1, wobei der Radius der imaginären Oberfläche, die dem Hohlraum zugeordnet ist, größer ist als der Radius der imaginären Oberfläche, die den Eingriffsabschnitt zugeordnet ist, so dass der Eingriffsabschnitt sich innerhalb des Hohlraums in einer radialen Richtung bewegen kann.

8. Gangschaltsystem nach Anspruch 1 oder Anspruch 7, wobei der Stift (19) wenigstens einen Schlitz aufweist, der von einem freien Ende des Stiftes (19) entlang der Richtung der Ausdehnung des Stiftes (19) verläuft, so dass der Stift (19) wenigstens zwei elastische Finger (20) aufweist, wobei der Stift (19) und die Bohrung (7) so dimensioniert sind, dass, wenn der Stift (19) in die Bohrung (7) eingreift, die Finger (20) zu der Längsachse des Stiftes (19) hin gedrückt werden, so dass sie durch ihre elastische Kraft Druckkräfte gegen die innere Oberfläche der Bohrung (7) ausüben, die dazu dienen, das Eingriffsteil (1) auf dem Stift (19) zu halten.

9. Gangschaltsystem nach einem der vorhergehenden Ansprüche, wobei an dem anderen der beiden Enden des Hohlraums (12) in der Richtung der dem Hohlraum (12) zugeordneten Symmetrieachse sich der Hohlraum (12) zu dem Außenraum des Endbereichs (10) des Hebels (10') öffnet, so dass eine Einführöffnung (23) in einer Oberfläche des Endbereichs (10) des Hebels (10') angeordnet ist, durch die das Eingriffsteil (1) entfernt werden kann aus und eingesetzt werden kann in den Hohlraum (12), indem es entlang der dem Hohlraum (12) zugeordneten Symmetrieachse (18) bewegt wird.

10. Gangschaltsystem nach Anspruch 9, wobei
- ein Vorsprung (22) nahe dem Rand der Einführöffnung (23) an einem der nach innen gerichteten Wandbereiche (13a, 13b) vorgesehen ist und sich in Richtung auf die dem Hohlraum (12) zugeordnete Symmetrieachse (18) hin erstreckt und
- eine längliche Vertiefung (5), die sich parallel zu der dem Eingriffsabschnitt (1) zugeordneten Symmetrieachse (6) erstreckt, in einer Umfangswand (3) des Eingriffsteils (1) vorgesehen ist,
- wobei der Vorsprung (22) und die längliche Vertiefung (5) so angeordnet und dimensioniert sind, dass es nur möglich ist, das Eingriffsteil (1) aus dem Hohlraum (12) zu entfernen bzw. in ihn einzusetzen, indem es entlang der dem Hohlraum (12) zugeordneten Symmetrieachse (18) bewegt wird, wenn das Eingriffsteil (1) eine Winkelorientierung hat, so dass der Vorsprung (22) innerhalb der länglichen Vertiefung (5) aufgenommen ist, und
- wobei der Vorsprung (22) so ausgestaltet ist, dass nach Einführen des Eingriffsteils (1) in den Hohlraum (12) das Eingriffsteil (1) innerhalb des Hohlraums (12) gedreht werden kann, wobei der Vorsprung (22) und die längliche Vertiefung (5) unterschiedliche Winkelorientierungen haben und der Vorsprung (22) das Eingriffsteil (1) in dem Hohlraum (12) hält.

11. Gangschaltsystem nach einem der vorhergehenden Ansprüche, wobei an einem der beiden Enden des Hohlraums (12) in der Richtung der dem Hohlraum (12) zugeordneten Symmetrieachse der Hohlraum durch einen Boden definiert ist, der einen anderen Bodenwandbereich (41) aufweist, und wobei das Eingriffsteil (1) eine Endfläche (4) hat, die sich senkrecht in Bezug auf die dem Eingriffsabschnitt (1) zugeordnete Symmetrieachse (6) erstreckt, wobei ein Vorsprung (40) angeordnet ist an einem von
- dem Bodenwandbereich (41), so dass er sich parallel zu der dem Hohlraum (12) zugeordneten Symmetrieachse (18) und auf Abstand sowohl zu der dem Hohlraum (12) zugeordneten Symmetrieachse (18) und der Oberfläche (17) des einen oder der mehreren nach innen gerichteten Wandbereiche (13a, 13b) erstreckt, oder
- der Endfläche (4), so dass er sich parallel zu der dem Eingriffsabschnitt (1) zugeordneten Symmetrieachse (6) und auf Abstand sowohl zu der dem Eingriffsabschnitt (1) zugeordneten Symmetrieachse (6) und der äußeren Oberfläche (3') des Eingriffsabschnitts (1) erstreckt,
und wobei eine Nut (8) vorgesehen ist in dem anderen von
- der Endfläche (4), so dass sie in Umfangsrichtung um die dem Eingriffsabschnitt (1) zugeordnete Symmetrieachse (6) und auf Abstand sowohl zu der dem Eingriffsabschnitt (1) zugeordneten Symmetrieachse (6) als auch der äußeren Oberfläche (3') des Eingriffsabschnitts (1) verläuft, oder
- dem Bodenwandbereich (41), so dass sie sich in Umfangsrichtung um die dem Hohlraum (12) zugeordnete Symmetrieachse (18) und auf Abstand sowohl zu der dem Hohlraum (12) zugeordneten Symmetrieachse (18) als auch der Oberfläche (17) des einen oder der mehreren nach innen gerichteten Wandbereiche (13a, 13b) verläuft,
wobei der Vorsprung (40) und die Nut (8) so eingerichtet sind, dass der Vorsprung (40) in der Nut (8) aufgenommen wird und sich in der Nut (8) bewegt, wenn das Eingriffsteil (1) um die Drehachse gedreht wird, und wobei wenigstens ein Bereich der äußeren Oberfläche des Vorsprungs (40) und wenigstens ein Bereich der inneren Oberfläche der Nut (8) zusätzliche zusammenwirkende Lageroberflächen bilden, die den Eingriffsabschnitt (1) innerhalb des Hohlraums (12) drehbar beweglich um die Drehachse lagern.

12. Gangschaltsystem nach Anspruch 11, wobei die Nut (8) sich entlang eines Kreises oder eines Kreissegmentes erstreckt.

13. Gangschaltsystem nach Anspruch 4 oder Anspruch 5 und gemäß Anspruch 11 oder Anspruch 12, wobei die Nut (8) oder der Vorsprung (40) des Bodenwandbereichs (41) in Bezug auf die Öffnung (16) an einer gegenüberliegenden Seite der dem Hohlraum (12) zugeordneten Symmetrieachse angeordnet ist.

## Revendications

1. Système de changement de vitesse comprenant
- un levier (10') de changement de vitesse,
- un élément allongé d'actionnement destiné à transférer un mouvement d'une partie d'extrémité (10) dudit levier (10') à une transmission, et
- un mécanisme d'accouplement accouplant une extrémité dudit élément allongé d'actionnement avec ladite partie d'extrémité (10) dudit levier (10'),
dans lequel ledit mécanisme d'accouplement comprend
- une cavité (12) réalisée dans ladite partie d'extrémité (10) dudit levier (10'), et
- un élément de prise (1) disposé au niveau d'une extrémité terminale d'une pièce d'extrémité allongée (2) dudit élément allongé, ledit élément de prise (1) comprenant une partie de prise (1) qui est reçue à l'intérieur de ladite cavité (12),
- dans lequel une surface extérieure (3') de ladite partie de prise (1) et une partie de surface (17) d'une ou de plusieurs parties de paroi orientées vers l'intérieur (13a, 13b) définissent ladite cavité (12)
a) chacune d'entre elles s'étendant sur une surface imaginaire respective présentant une symétrie cylindrique et définissant respectivement un axe de symétrie (6) associé à ladite partie de prise (1) et un axe de symétrie (18) associé à ladite cavité (12), et
b) formant des surfaces d'appui de coopération (3', 17) qui supportent ladite partie de prise (1) à l'intérieur de ladite cavité (12) pour un mouvement de rotation autour d'un axe de rotation défini par ledit axe de symétrie (6) associé à ladite partie de prise (1), de sorte que, lors de la manipulation dudit levier (10'), ledit élément de prise (1) tourne autour dudit axe de rotation, et
- dans lequel ledit mécanisme d'accouplement comprend en outre une broche (19) disposée à l'intérieur de ladite cavité (12), et un alésage (7) est réalisé dans ledit élément de prise (1), l'alésage (7) étant formé et disposé pour recevoir au moins une partie de ladite broche (19) de sorte que ledit élément de prise (1) peut tourner autour de ladite broche (19) et que ladite broche (19) définit ledit axe de rotation, **caractérisé en ce que**, au niveau de l'une des deux extrémités de ladite cavité (12) dans la direction dudit axe de symétrie (18) associé à ladite cavité (12), ladite cavité (12) est définie par une partie de fond comprenant au moins une partie de paroi de fond (14, 41, 42), ladite broche (19) étant fixée à un bras élastique, et s'en étendant, qui forme l'une (14) de ladite au moins une des parties de paroi de fond (14, 41, 42).

2. Système de changement de vitesse selon la revendication 1, dans lequel lesdites surfaces imaginaires sont cylindriques.

3. Système de changement de vitesse selon l'une quelconque des revendications précédentes, dans lequel ladite pièce d'extrémité allongée (2) est liée à ladite surface extérieure (3') de ladite partie de prise (1), de sorte que ladite pièce d'extrémité allongée (2) s'étend transversalement audit axe de symétrie (6) associé à ladite partie de prise (1).

4. Système de changement de vitesse selon l'une quelconque des revendications précédentes, dans lequel une ouverture (16) est réalisée dans l'une de ladite ou desdites parties de parois orientées vers l'intérieur (13a, 13b) définissant ladite cavité (12) ou entre deux de ces parties de parois orientées vers l'intérieur (13a, 13b), ouverture (16) à travers laquelle ladite pièce d'extrémité allongée (2) s'étend hors de ladite cavité (12) vers l'extérieur de ladite partie d'extrémité (10) dudit levier (10').

5. Système de changement de vitesse selon la revendication 4, dans lequel l'amplitude maximale de mouvement de rotation dudit élément de prise (1) autour dudit axe de rotation est définie par deux parties de parois opposées (31a, 31b) délimitant ladite ouverture (16), ladite pièce d'extrémité allongée (2) venant en butée contre l'une, respective, desdites deux parois opposées (31a, 31b) dans les deux positions extrêmes des deux sens de rotation.

6. Système de changement de vitesse selon l'une quelconque des revendications précédentes, dans lequel ledit élément de prise (1) et ladite cavité (12) sont formés et dimensionnés de sorte que ledit élément de prise (1) est intégralement reçu à l'intérieur de ladite cavité (12) .

7. Système de changement de vitesse selon la revendication 1, dans lequel le rayon de ladite surface imaginaire associée à ladite cavité est plus grand que le rayon de ladite surface imaginaire associée à ladite partie de prise, de sorte que ladite partie de prise peut bouger dans une direction radiale à l'intérieur de ladite cavité.

8. Système de changement de vitesse selon la revendication 1 ou la revendication 7, dans lequel ladite broche (19) comprend au moins une fente qui s'étend d'une extrémité terminale libre de ladite broche (19) dans la direction d'étendue de ladite broche (19) de sorte que ladite broche (19) comprend au moins deux doigts élastiques (20), ladite broche (19) et ledit alésage (7) étant dimensionnés de sorte que, lorsque ladite broche (19) est en prise avec ledit alésage (7), lesdits doigts (5) sont poussés en direction de l'axe longitudinal de ladite broche (19), en ayant pour conséquence le fait que, en raison de leur force élastique, ils exercent des forces de pression contre la surface intérieure dudit alésage (7), lesquelles servent à maintenir ledit élément de prise (1) sur ladite broche (19).

9. Système de changement de vitesse selon l'une quelconque des revendications précédentes, dans lequel, au niveau de l'autre des deux extrémités de ladite cavité (12) dans la direction dudit axe de symétrie (18) associé à ladite cavité (12), ladite cavité (12) est ouverte en direction de l'extérieur de ladite partie d'extrémité (10) dudit levier (10'), de sorte qu'une ouverture d'introduction (23) est réalisée dans une surface de ladite partie d'extrémité (10) dudit levier (10'), ouverture d'introduction (23) à travers laquelle ledit élément de prise (1) peut être retiré de ladite cavité (12), et y être introduit, par déplacement de ce dernier le long dudit axe de symétrie (18) associé à ladite cavité (12).

10. Système de changement vitesse selon la revendication 9, dans lequel
- un ergot (22) est réalisé à proximité du bord de ladite ouverture d'introduction (23), au niveau de l'une desdites parties de paroi orientées vers l'intérieur (13a, 13b), et s'étend en direction dudit axe de symétrie (18) associé à ladite cavité (12), et
- un évidement allongé (5) s'étendant parallèlement audit axe de symétrie (6) associé à ladite partie de prise (1) est réalisé dans une surface circonférentielle (3) dudit élément de prise (1),
- dans lequel ledit ergot (22) et ledit évidement allongé (5) sont disposés et dimensionnés de sorte qu'il n'est respectivement possible de retirer ledit élément de prise (1) de ladite cavité (12) et de l'y introduire par déplacement de ce dernier le long dudit axe de symétrie (18) associé à ladite cavité (12) que si ledit élément de prise (1) se trouve dans une orientation angulaire telle que ledit ergot (22) est reçu à l'intérieur dudit évidement allongé (5), et
- dans lequel ledit ergot (22) est réalisé de sorte que, consécutivement à l'introduction dudit élément de prise (1) dans ladite cavité (12), ledit élément de prise (1) peut tourner à l'intérieur de ladite cavité (12) lorsque ledit ergot (22) et ledit évidement allongé (5) se trouvent dans des orientations angulaires différentes et que ledit ergot (22) maintient ledit élément de prise (1) à l'intérieur de ladite cavité (12).

11. Système de changement de vitesse selon l'une quelconque des revendications précédentes, dans lequel, au niveau de l'une des deux extrémités de ladite cavité (12) dans la direction dudit axe de symétrie (18) associé à ladite cavité (12), ladite cavité (12) est définie par la partie de fond comprenant une autre partie de paroi de fond (41), et ledit élément de prise (1) comprend une face d'extrémité (4) s'étendant perpendiculairement audit axe de symétrie (6) associé à ladite partie de prise (1), une saillie (40) étant réalisée sur l'une
- de ladite partie de paroi de fond (41) de sorte qu'elle s'étend parallèlement audit axe de symétrie (18) associé à ladite cavité (12) et qu'elle est espacée à la fois dudit axe de symétrie (18) associé à ladite cavité (12) et de ladite surface (17) de ladite ou desdites parties de paroi orientées vers l'intérieur (13a, 13b), ou
- de ladite face d'extrémité (4) de sorte qu'elle s'étend parallèlement audit axe de symétrie (6) associé à ladite partie de prise (1) et qu'elle est espacée à la fois dudit axe de symétrie (6) associé à ladite partie de prise (1) et de ladite surface extérieure (3') de ladite partie de prise (1),
et une rainure (8) est réalisée sur l'autre
- de ladite face d'extrémité (4) de sorte qu'elle s'étend circonférentiellement autour dudit axe de symétrie (6) associé à ladite partie de prise (1) et qu'elle est espacée à la fois dudit axe de symétrie (6) associé à ladite partie de prise (1) et de ladite surface extérieure (3') de ladite partie de prise (1), ou
- de ladite partie de paroi de fond (41) de sorte qu'elle s'étend circonférentiellement autour dudit axe de symétrie (18) associé à ladite cavité (12) et qu'elle est respectivement espacée à la fois dudit axe de symétrie (18) associé à ladite cavité (12) et de ladite surface (17) de ladite ou desdites parties de paroi orientées vers l'intérieur (13a, 13b),
dans lequel ladite saillie (40) et ladite rainure (8) sont réalisées de sorte que ladite saillie (40) est reçue à l'intérieur de ladite rainure (8) et se déplace à l'intérieur de ladite rainure (8) lors de la rotation dudit élément de prise (1) autour dudit axe de rotation, et dans lequel au moins une partie de la surface extérieure de ladite saillie (40) et au moins une partie de la surface intérieure de ladite rainure (8) forment des surfaces d'appui de coopération supplémentaires qui supportent ladite partie de prise (1) à l'intérieur de ladite cavité (12) pour ledit mouvement de rotation autour dudit axe de rotation.

12. Système de changement de vitesse selon la revendication 11, dans lequel ladite rainure (8) s'étend suivant un cercle ou un segment de cercle.

13. Système de changement vitesse selon la revendication 4 ou la revendication 5 et selon la revendication 11 ou la revendication 12, dans lequel ladite rainure (8) ou ladite saillie (40) de ladite partie de paroi de fond (41) est réalisé sur un côté opposé dudit axe de symétrie (18) associé à ladite cavité (12) par rapport à ladite ouverture (16).
